(19) Europäisches Patentamt / European Patent Office / Office européen des brevets

(11)  **EP 4 372 415 B1**

(12)  **EUROPEAN PATENT SPECIFICATION**

(45) Date of publication and mention
of the grant of the patent:
**01.04.2026  Bulletin 2026/14**

(21) Application number: **22207741.4**

(22) Date of filing: **16.11.2022**

(51) International Patent Classification (IPC):
*G01S 13/42* *(2006.01)*    *G01S 13/72* *(2006.01)*
*G01S 13/931* *(2020.01)*    *G01S 7/41* *(2006.01)*
*G01S 13/58* *(2006.01)*

(52) Cooperative Patent Classification (CPC):
**G01S 13/931; G01S 7/415; G01S 13/42;
G01S 13/584; G01S 13/726;** G01S 2013/93271;
G01S 2013/93274

(54)  **RADAR MULTIPATH DETECTOR**

RADAR MEHRWEGEDETEKTOR

DÉTECTEUR MULTIVOIE DE RADAR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**22.05.2024  Bulletin 2024/21**

(73) Proprietor: **Aptiv Technologies AG
8200 Schaffhausen (CH)**

(72) Inventor: **Carlström, Niclas
416 57 Gothenburg (SE)**

(74) Representative: **Bardehle Pagenberg
Partnerschaft mbB
Patentanwälte Rechtsanwälte
Prinzregentenplatz 7
81675 München (DE)**

(56) References cited:
**EP-A1- 3 299 841        WO-A1-2020/176483
WO-A1-2021/127702    US-A1- 2021 104 027**

**Description**

[Technical Field]

The present invention relates to methods and systems for identifying objects observed by a radar sensor.

[Background]

A radar signal transmitted by a radar sensor may be reflected by an object in an environment of the radar sensor and return to the radar sensor. The reflected radar signal received by the radar sensor may be indicative of a range, an angle, and a range rate (relative radial velocity) of the object. For example, in automotive applications, a radar sensor mounted on a vehicle may be used to monitor an environment of the vehicle. Based on the reflected radar signals, objects such as other vehicles, pedestrians and/or other obstacles may be identified. By continuously monitoring the environments using the radar sensor, objects in the environment of the vehicle may be tracked. The identification of objects in an environment of a vehicle is an essential pre-requisite for various tasks, such as in autonomously driving vehicles.

However, there is a possibility that a transmitted radar signal is reflected multiple times before being received by the radar sensor. This phenomenon is commonly referred to as a "multipath reflection" and can result in the mis-identification of an object, wherein a mis-identified object is commonly referred to as a "ghost object".

There is, therefore, a need to provide a method for identifying ghost objects observed by a radar sensor.

WO 2020/176483 A1 discloses techniques for determining reflected returns in radar sensor data. In some instances, pairs of radar returns may be compared to one another. For example, a velocity associated with a first radar return may be projected onto a radial direction associated with a second radar return to determine a projected velocity. In some examples, the second radar return may be a reflected return if the magnitude of the projected velocity corresponds to a magnitude of the second radar return. In other instances, a reflection point may be determined using position data and the second radar return may be a reflected return if an object is located at the reflection point. In some instances, a vehicle, such as an autonomous vehicle, may be controlled at the exclusion of information from reflected returns.

WO 2021/127702 A1 discloses a system including a sensor, which is configured to detect a plurality of objects within an area, and a computing device in communication with the sensor. The computing device is configured to determine that one of the plurality of objects is static, determine that one of the plurality of objects is temporary, determine a geometric relationship between the temporary object and the static object, and determine whether one of the plurality of objects is a ghost object based on the geometric relationship.

EP 3 299 841 A1 discloses a method for analyzing reflection signals. Reflection signals corresponding to reflection point candidates are received by a sensor. For first to third reflection signals corresponding to respective first to third reflection point candidates, distances are determined. A first distance extends between the first and second reflection point candidates, a second distance extends between the second and third reflection point candidates, a third distance extends between the first and third reflection point candidates, and respective sensor distances extend between the first or third reflection point candidate and the sensor. It is checked if the time dependencies of the absolute value of the first distance and the absolute value of the second distance are equal, and if the time dependencies of the first distance and the second distance are mirror symmetric relative to a plane which is orthogonal to the third distance and extends through the second reflection point candidate. If this is the case, the reflection signal out of the first reflection signal and the third reflection signal corresponding to the reflection point candidate having a larger sensor distance is classified as a false signal.

US 2021/104027 A1 discloses systems and methods involving detecting objects using a radar system of a vehicle. Tracks of the objects are initiated in a track database. The tracks store data, respectively, for the objects and are updated based on additional detections of the objects. The tracks of the objects are initially unclassified tracks. Two tracks corresponding to two of the objects are selected as a candidate pair. Criteria are applied to the candidate pair to determine whether one track is of a ghost object and another track is of a true object corresponding with the ghost object. The ghost object represents detection of the true object in an incorrect location. The candidate pair is classified as tracks of a true object and ghost object pair based on determining that the one track is of the ghost object and the other track is of the true object corresponding with the ghost object.

[Summary]

The novel approach provides a method to determine whether a reflected radar signal received by a radar sensor stems from a ghost object. This way, it becomes possible to mitigate the tracking of ghost objects.

The invention is set out in the appended independent claims. Further preferred embodiments are described in the dependent claims.

[Brief description of the drawings]

Embodiments of the present invention, which are presented for better understanding the inventive concepts, but which are not to be seen as limiting the invention, will now be described with reference to the figures in which:

Fig. 1A    shows a side view of a vehicle comprising a radar sensor in a front-right corner of a chassis of the vehicle;

Fig. 1B    shows a top view of a vehicle comprising a radar sensor in a front-right corner of a chassis of the vehicle;

Fig. 2A    shows a multipath reflection off objects in an environment of a vehicle;

Fig. 2B    shows a multipath reflection off objects in an environment of a vehicle;

Fig. 3    shows a flowchart of a method for identifying a ghost object observed by a radar sensor used to track objects according to an embodiment of the present invention; and

Fig. 4    shows a schematic illustration of a hardware structure of a data processing apparatus according to an embodiment of the present invention.

[Detailed description]

The present invention shall now be described in conjunction with specific embodiments. The specific embodiments serve to provide the skilled person with a better understanding but are not intended to in any way restrict the scope of the invention, which is defined by the appended claims.

A radar sensor may comprise transmit and receive antennas. A transmit antenna may transmit a radar signal and the transmitted radar signal may be reflected by a target. A receive antenna may receive the reflected radar signal. Alternatively, a radar sensor may comprise transducer antennas capable of switching between transmitting and receiving radar signals. A pulse-Doppler radar sensor, for example, may transmit a radar signal comprising a set of coherent pulses repeated at a steady pulse repetition frequency (PRF).

The one or more radar antennas may, for example, be part of a frequency modulated continuous wave radar (FMCW) radar sensor. A FMCW radar sensor may be used to measure a range (distance to a target) based on time differences between transmitted and reflected radar signals. The FMCW radar sensor may transmit a continuous radar signal with alternating frequencies. For example, The FMCW radar may generate a frequency ramp, commonly referred to as a chirp.

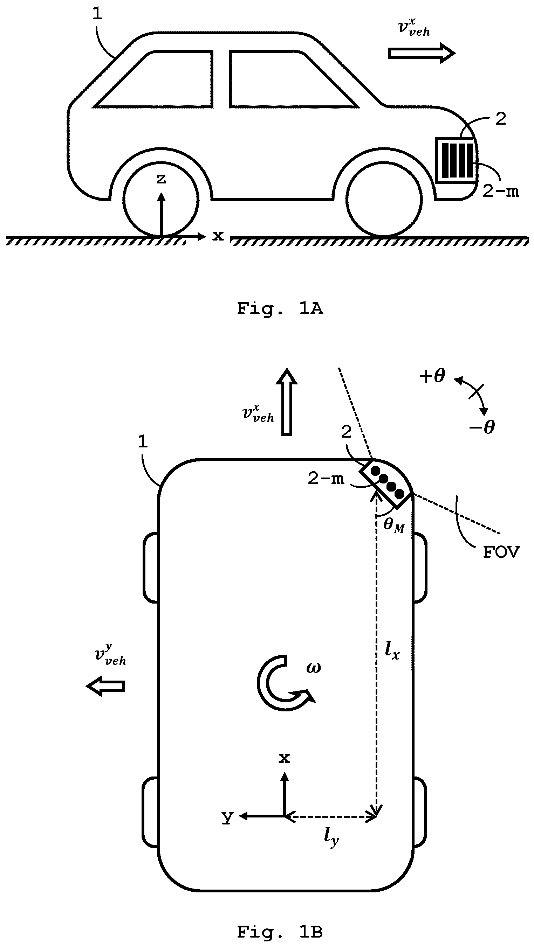

Figs. 1A and 1B show side vie and top view, respectively, of a vehicle 1 comprising a radar sensor 2 in a front-right (FR) corner of a chassis of the vehicle. In this example, the radar sensor 2 comprises four radar antennas (antenna elements) 2-m (m=1,...,4) arranged in parallel (to the z-axis) along a first arraying direction (in the x-y-plane). Within the field-of-view (FOV) of the radar sensor 2, reflected radar signals may hit the radar antennas 2-m with different phases.

Here, the Cartesian coordinate system defined by the x, y and z-axes as shown in Figs. 1A and 1B is usually referred to as the vehicle coordinate system (VCS). The origin of a two-dimensional VCS may be located at the center of the vehicle's rear axle, the x-axis may point along the forward direction and the y-axis may point to the left side of the vehicle. In a three-dimension version of the VCS, the origin may be located on the ground, below the midpoint of the rear axle, and the z-axis may point up from the ground so as to maintain the right-handed coordinate system.

As shown in Figs. 1A and 1B, in a case where the radar sensor is mounted on a vehicle, the information on the ego-motion of the vehicle may comprise the longitudinal and lateral velocities of the vehicle, $v_{veh}^x$ and $v_{veh}^y$, respectively, and the yaw rate $\omega$ of the vehicle. The mounting positions may comprise the longitudinal and lateral mounting positions, $l_x$ and $l_y$, respectively. The mounting angle of the one or more radar antennas on the vehicle may be denoted by $\theta_M$. The ego-motion of the vehicle may be determined based on measurements by the radar sensor or may be determined based on auxiliary measurement provided by a motion sensor such as, for example, an on-board odometry sensor, a GPS-based speedometer, or the like.

The reflected radar signal may be received by each of the one or more radar antennas. Each antenna measures the reflected radar signal and may use a specified sampling frequency. The resulting radar data may be processed to derive a range and range rate (Doppler) of an object off which the radar signal is reflected. An overview of common processing techniques for radar data is provided, for example, in chapter IV of Reference [1] (a list of references is provided at the end of the present description).

Direction of arrival (DOA) estimation methods such as beam-forming fast Fourier transformation (beam-forming FFT) may be used to estimate the angle of incidence of the received electromagnetic signal reflected from an object. For example, for a radar sensor comprising a plurality of receive antennas arranged in parallel along a first arraying direction (i.e. an antenna array), the DOA may be measured in a plane spanned by the first arraying direction and an axis perpendicular to the antennas, e.g. the forward direction of the radar sensor (see also Fig. 1B). A polar coordinate system having a midpoint of the radar sensor at the origin may be defined such that the DOA is represented by the azimuth angle, in the following simply referred to as the angle $\theta$. For example, for a radar sensor with a 160° FOV, the angle $\theta$ may take values between -80° and +80°. When more than one radar sensors are employed a common polar coordinate system may be formed.

It should be noted, however, that a radar sensor may comprise another plurality of receive antennas (i.e. another antenna array) having a second arraying direction which is, for example, perpendicular to the first arraying direction. Likewise, when more than one radar sensors are employed, the more than one radar sensor may have different arraying directions. This way, another angle (e.g. the polar angle in a spherical coordinate system of the radar sensor) may be determined.

More than one radar sensors may be mounted on the vehicle. For example, the vehicle may comprise one or more radar sensors mounted on one or more corners of a chassis of the vehicle. For example, the vehicle may comprise four radar sensors mounted on a rear-left, rear-right, front-right and front-left corner of the chassis. An environment traversed by the vehicle may comprise moving objects and stationary objects.

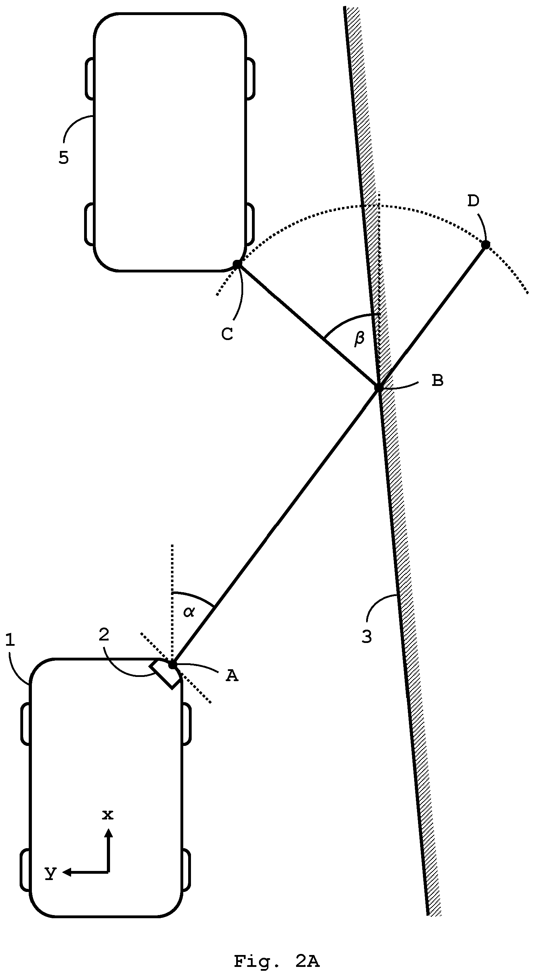

Fig. 2A shows a multipath reflection off objects in an environment of a vehicle 1. Here, a radar signal is transmitted by the radar sensor 2 at an angle $\beta$, wherein the angle $\beta$ is measured from the x-axis of the VCS of the vehicle 1. The radar signal propagates from a point A corresponding to the radar sensor 2 to a point B where it is reflected, at an angle $\alpha$, wherein the angle $\alpha$ is measured from the x-axis of the VCS of the vehicle 1. In the present example, the point B is a point on an elongated obstacle 3. Then, the reflected radar signal propagates further from the point B to a point C where it is reflected back. In the present example, the point C is a point on a chassis of another vehicle 5. Then, the reflected radar signal propagates further from the point C to the point B where it is reflected again. Then, the reflected radar signal propagates further from the point B to the point A where it is received by the radar sensor 2. In other words, the radar signal propagates along the path A → B → C → B → A.

However, the reflected radar signal received by the radar sensor 2 is indicative of a range $\overline{AD}$ and the angle $\alpha$ corresponding to a distance and a direction of a point D as viewed from the radar sensor 2, wherein the angle $\alpha$ corresponds to the DOA of the received reflected radar wave. In the present example, however, no real object (vehicle, obstacle or the like) is present at the point D. Thus, in reference implementations, if the point D is identified as belonging to a real object off which the radar signal is assumed to have been reflected, the object may be mis-identified as such. That is, as the distance $\overline{AB} + \overline{BC}$ is equal to the range $\overline{AD}$ and the point B and the point D result in the same DOA (angle $\alpha$), the multipath reflection A → B → C → B → A appears like a reflection A → D → A.

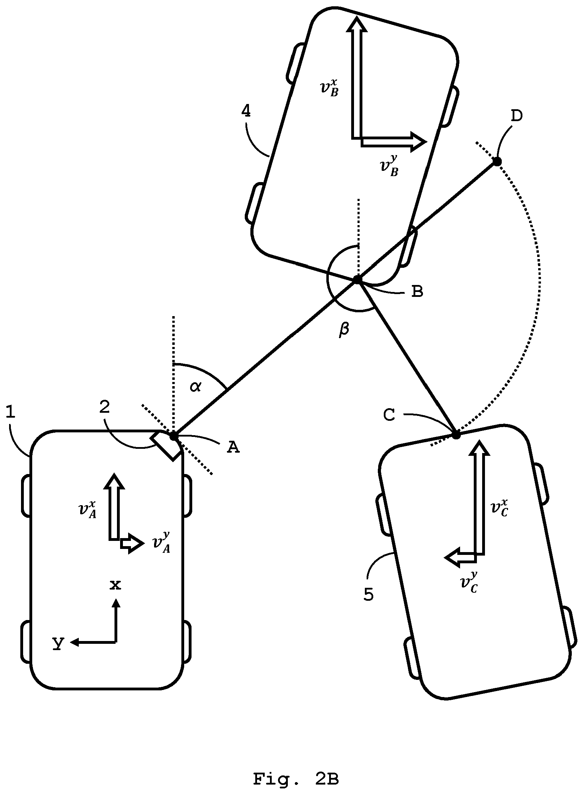

Fig. 2B shows a multipath reflection off objects in an environment of a vehicle. Here, the radar signal propagates along the path A → B → C → B → A as described with reference to Fig. 2A with the difference being that the point B belongs to yet another vehicle 4. Furthermore, in the example of Fig. 2B, the velocities of the vehicle 1, the other vehicle 5 and the yet another vehicle 4 indicate by arrows indicating respective longitudinal and lateral velocities in the VCS of the vehicle 1.

That is, $v_A^x$ and $v_A^y$ indicate respectively the longitudinal and lateral velocity of the vehicle 1 and hence of the point A, $v_B^x$ and $v_B^y$ indicate respectively the longitudinal and lateral velocity of the yet another vehicle 4 and hence of the point B, $v_C^x$ and $v_C^y$ indicate respectively the longitudinal and lateral velocity of the another vehicle 5 and hence of the point C.

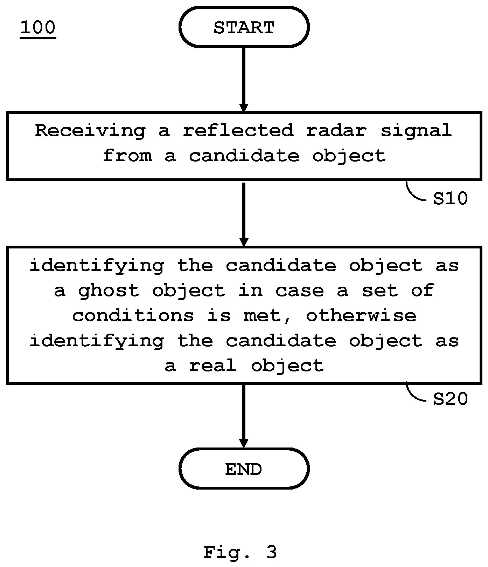

Fig. 3 shows a flowchart of a method 100 for identifying a ghost object observed by a radar sensor used to track objects according to an embodiment of the present invention. In the following, aspects of the method 100 are illustrated with reference to the examples of Figs. 2A and 2B. In the example of Fig. 2A, the tracked objects comprise the elongated obstacle 3 and the other vehicle 5. In the example of Fig. 2B, the tracked objects comprise the other vehicle 5 and the yet other vehicle 4.

In step S10, a reflected radar signal from a candidate object is received. In the examples of Figs. 2A and 2B, the candidate object is associated with the point D. For example, the candidate object may be a potential object which is not yet tracked. The candidate object may be a real object appearing in the FOV of the radar sensor, or a ghost object caused by a multipath reflection.

In step s20, the candidate object is identified as a ghost object in case a set of conditions is met, otherwise the candidate object is identified as a real object. In the examples of Figs. 2A and 2B, the candidate object corresponds to a potential object located at point D. Hence, it is determined, based on the received radar signal which is indicative of a range $\overline{AD}$ and angle $\alpha$, whether or not there is a real object at the point D.

The method 100 may further comprise tracking the candidate object when it is identified as a real object. This way, the candidate object may become one of the tracked objects. In other words, the tracked objects may be updated to further include the candidate object. A subsequent iteration of the method 100 may take the updated tracked objects into account, wherein a subsequent object is the subject of steps S10 and S20. This way, the subsequent iteration of the method 100 may be able to consider multipath reflections with one or more reflections being caused by the candidate object identified as a real object in a preceding iteration of the method 100.

Information on the tracked objects may be stored in a database and the information may comprise positions and velocities of the tracked objects in a coordinate system of the radar sensor. The coordinate system of the radar sensor may, for example, be the VCS of a vehicle comprising the radar sensor. The position of a tracked object may be inferred from the range and angle measured by the radar sensor. The velocity of a tracked object may be inferred from the range rate (Doppler) measured by the radar sensor. The information may further include dimensions (sizes), orientations and types (classifications) of the tracked objects.

The information stored in the database may be updated based on measurements by the radar sensor. In other words, the information on the tracked objects may be continuously updated. For example, the trajectory of each of the tracked objects may be monitored, wherein the trajectory of each of the tracked objects indicates the position and velocity of the corresponding tracked object as a function of time.

Even if information of a tracked object is not updated during a time period, the tracked object may remain in the database and be used in determining whether or not the candidate object is a ghost object. For example, information of a tracked object may not be updated during the time period when there is a sporadic drop in detection caused, for example, by noise, jitter or a temporary occlusion of the tracked object at least in the electromagnetic spectrum of the radar signal. Extrapolation methods may be used to extrapolate information of the tracked object during the time period using earlier information from prior to the time period. This way, the method 100 may be more robust against sporadic drops in detection.

The set of conditions may comprise a first condition which is met when a first object of the tracked objects lies on a path between the radar sensor and the candidate object. In the examples of Figs. 2A and 2B, the first object corresponds to a tracked object located at point B, i.e. the elongated obstacle 3 or the yet another vehicle 4. Hence, it is determined, that the first condition is met since the point B lies on a path (straight line) between the point A and the point D. That is, the points B and D lie at the same angle $\alpha$ and the distance $\overline{AB}$ is less than the range $\overline{AD}$.

The set of conditions may further comprise a second condition which is met when the distance from a second object of the tracked objects to the first object is equal to the distance from the candidate object to the first object. In the examples of Figs. 2A and 2B, the first object corresponds to a tracked object located at point C, i.e. the other vehicle 5. Hence, it is determined, that the second condition is met since the distance $\overline{BC}$ is equal to the distance $\overline{BD}$, as indicate by the partial circle around point B in Figs. 2A and 2B.

The second condition may be tested for all tracked objects by first computing the test distance $\delta = \overline{AD} - \overline{AB}$ and comparing it to distances from point B to the tracked objects.

If a tracked object is found which lies at a distant equal to the testing distance $\delta$ from the point B, the second condition is satisfied.

The set of conditions may further comprise a third condition which is met when a difference between the measured range rate of the candidate object and a predicted range rate of the candidate object is below a threshold. The predicted range rate may be computed based on a first relative velocity between the radar sensor and the first object and a second relative velocity between the first object and the second object, assuming that the candidate object is a ghost object. In the example of Fig. 2B, the predicted range rate of the candidate object at the point D may be computed under the assumption of a multipath reflection A → B → C → B → A. The predicted range rate may be computed as:

$$\dot{r}_{predicted} = cos(\alpha) \cdot \left(v_B^x - v_A^x\right) + sin(\alpha) \cdot \left(v_B^y - v_A^y\right)$$

$$+ cos(\beta) \cdot \left(v_C^x - v_B^x\right) + sin(\beta) \cdot \left(v_C^y - v_B^y\right)$$

The predicted range rate $\dot{r}_{predicted}$ of the candidate object assuming multipath reflections may be compared to the measured range rate $\dot{r}_{measured}$ of of the candidate object based on the threshold $\Delta$:

$$\left|\dot{r}_{predicted} - \dot{r}_{measured}\right| < \Delta$$

If the above inequality is satisfied, the third condition is met, and the candidate object may be identified as ghost object. The above inequality may be modified such that relative difference (e.g. in percent) between the predicted range rate $\dot{r}_{predicted}$ and the measured range rate $\dot{r}_{measured}$ is compared to the threshold $\Delta$. The above inequality may be modified by not computing an absolute value of the difference and comparing the difference to a threshold corresponding to an interval of values.

The threshold may be a predetermined value. The predetermined value may be set in advance of performing the step S10. Alternatively, the threshold may be based on one or more of a velocity of the radar sensor, a velocity of the first object and a velocity of the second object. In other words, the threshold may be an adaptive threshold that depends on the ego-motion of the radar sensor velocities of two or more of the tracked objects.

In an embodiment in which the radar sensor is mounted on a vehicle, the method 100 may further comprise executing, when the candidate object (D) is identified as a real object, a predetermined operation of the vehicle based on the range and range rate of the candidate object. The predetermined operation may comprise adaptive headlight control, automatic steering and/or automatic emergency breaking. This way, the execution of the predetermined operation may be avoided in case the candidate object corresponds to a ghost object and the execution of the predetermined operation may only be performed based on correctly identified objects.

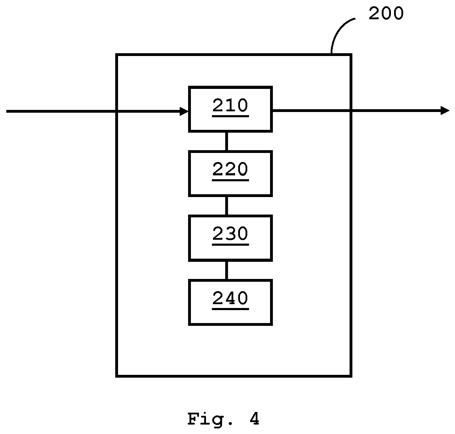

Fig. 4 is a schematic illustration of a hardware structure of a data processing apparatus comprising means for carrying out the steps of the methods of any of the embodiments disclosed above.

The data processing apparatus 200 has an interface module 210 providing means for transmitting and receiving information. The data processing apparatus 200 has also a processor 220 (e.g. a CPU) for controlling the data processing apparatus 200 and for, for instance, process executing the steps of the methods of any of the embodiments disclosed above. It also has a working memory 230 (e.g. a random-access memory) and an instruction storage 240 storing a computer program having computer-readable instructions which, when executed by the processor 220, cause the processor 220 to perform the methods of any of the embodiments disclosed above.

The instruction storage 240 may include a ROM (e.g. in the form of an electrically erasable programmable read-only memory (EEPROM) or flash memory) which is preloaded with the computer-readable instructions. Alternatively, the instruction storage 240 may include a RAM or similar type of memory, and the computer-readable instructions can be input thereto from a computer program product, such as a computer-readable storage medium such as a CD-ROM, etc.

In the foregoing description, aspects are described with reference to several embodiments. Accordingly, the specification should be regarded as illustrative, rather than restrictive. Similarly, the figures illustrated in the drawings, which highlight the functionality and advantages of the embodiments, are presented for example purposes only. The architecture of the embodiments is sufficiently flexible and configurable, such that it may be utilized in ways other than those shown in the accompanying figures.

Software embodiments presented herein may be provided as a computer program, or software, such as one or more programs having instructions or sequences of instructions, included or stored in an article of manufacture such as a machine-accessible or machine-readable medium, an instruction store, or computer-readable storage device, each of which can be non-transitory, in one example embodiment. The program or instructions on the non-transitory machine-accessible medium, machine-readable medium, instruction store, or computer-readable storage device, may be used to program a computer system or other electronic device. The machine- or computer-readable medium, instruction store, and storage device may include, but are not limited to, floppy diskettes, optical disks, and magneto-optical disks or other types of media/machine-readable medium/instruction store/storage device suitable for storing or transmitting electronic instructions. The techniques described herein are not limited to any particular software configuration. They may find applicability in any computing or processing environment. The terms "computer-readable", "machine-accessible medium", "machine-readable medium", "instruction store", and "computer-readable storage device" used herein shall include any medium that is capable of storing, encoding, or transmitting instructions or a sequence of instructions for execution by the machine, computer, or computer processor and that causes the machine/computer/computer processor to perform any one of the methods described herein. Furthermore, it is common in the art to speak of software, in one form or another (e.g., program, procedure, process, application, module, unit, logic, and so on), as taking an action or causing a result. Such expressions are merely a shorthand way of stating that the execution of the software by a processing system causes the processor to perform an action to produce a result.

Some embodiments may also be implemented by the preparation of application-specific integrated circuits, field-programmable gate arrays, or by interconnecting an appropriate network of conventional component circuits.

Some embodiments include a computer program product. The computer program product may be a storage medium or media, instruction store(s), or storage device(s), having instructions stored thereon or therein which can be used to control, or cause, a computer or computer processor to perform any of the procedures of the example embodiments described herein. The storage medium/instruction store/storage device may include, by example and without limitation, an optical disc, a ROM, a RAM, an EPROM, an EEPROM, a DRAM, a VRAM, a flash memory, a flash card, a magnetic card, an optical card, nano systems, a molecular memory integrated circuit, a RAID, remote data storage/archive/warehousing, and/or any other type of device suitable for storing instructions and/or data.

Stored on any one of the computer-readable medium or media, instruction store(s), or storage device(s), some implementations include software for controlling both the hardware of the system and for enabling the system or microprocessor to interact with a human user or other mechanism utilizing the results of the embodiments described herein. Such software may include without limitation device drivers, operating systems, and user applications. Ultimately, such computer-readable media or storage device(s) further include software for performing example aspects, as described above.

Included in the programming and/or software of the system are software modules for implementing the procedures described herein. In some example embodiments herein, a module includes software, although in other example embodiments herein, a module includes hardware, or a combination of hardware and software.

[References]

[1] Principles of Modern Radar: Basic Principles, Volume 1; Richards, M.A. and Scheer, J.A. and Scheer, J. and Holm, W.A.; Institution of Engineering and Technology; 2010.

## Claims

1. A computer-implemented method for identifying a ghost object observed by a radar sensor (A) mounted on a vehicle (1) and used to track objects, the method comprising:

   receiving (S10) a reflected radar signal from a candidate object (D); and
   identifying (S20) the candidate object as a ghost object in case a set of conditions is met, otherwise identifying the candidate object as a real object;
   wherein the set of conditions comprises:

   a first condition which is met when a first object (B) of the tracked objects lies on a path between the radar sensor (A) and the candidate object (D);
   a second condition which is met when the distance from a second object (C) of the tracked objects to the first object (B) is equal to the distance from the candidate object (D) to the first object (B);
   wherein the reflected radar signal is indicative of a measured range rate of the candidate object (D), and the set of conditions further comprises:
   a third condition which is met when a difference between the measured range rate of the candidate object (D) and a predicted range rate of the candidate object (D) is below a threshold, wherein the predicted range rate is computed based on a first relative velocity between the radar sensor (A) and the first object (B) and a second relative velocity between the first object (B) and the second object (C), assuming that the candidate object (D) is a ghost object.

2. The method according to claim 1, wherein information on the tracked objects is stored in a database and the information comprises positions and velocities of the tracked objects in a coordinate system of the radar sensor.

3. The method according to claim 2, wherein the information stored in the database is updated based on measurements by the radar sensor.

4. The method according to any of the preceding claims, wherein the threshold is a predetermined value.

5. The method according to any of the claims 1 to 3, wherein the threshold is based on one or more of a velocity of the radar sensor (A), a velocity of the first object (B) and a velocity of the second object (C).

6. The method according to any of the preceding claims, further comprising:
   tracking the candidate object(D) when it is identified as a real object.

7. The method according to any of the preceding claims, wherein the tracked objects are located in a field-of-view of the radar sensor (A).

8. The method according to any one of the preceding claims, further comprising:

   executing, when the candidate object (D) is identified as a real object, a predetermined operation of the vehicle (1) based on the range and range rate of the candidate object (D),
   wherein the predetermined operation comprises adaptive headlight control, automatic steering and/or automatic emergency breaking.

9. A data processing apparatus (200) comprising means for receiving information on a reflected radar signal and means for carrying out the method according to any one of the preceding claims.

**10.** A vehicle (1) comprising:

a radar sensor (A) adapted to receive a reflected radar signal from a candidate object (D); and
the data processing apparatus (200) according to claim 9.

**Patentansprüche**

**1.** Computerimplementiertes Verfahren zum Identifizieren eines Geisterobjekts, das von einem Radarsensor (A) beobachtet wird, der an einem Fahrzeug (1) angebracht ist und zum Verfolgen von Objekten verwendet wird, wobei das Verfahren Folgendes umfasst:

Empfangen (S10) eines reflektierten Radarsignals von einem Kandidatenobjekt (D); und
Identifizieren (S20) des Kandidatenobjekts als ein Geisterobjekt, falls ein Satz von Bedingungen erfüllt ist, andernfalls Identifizieren des Kandidatenobjekts als ein reales Objekt;
wobei der Satz von Bedingungen Folgendes umfasst:

eine erste Bedingung, die erfüllt ist, wenn ein erstes Objekt (B) der verfolgten Objekte auf einem Pfad zwischen dem Radarsensor (A) und dem Kandidatenobjekt (D) liegt;
eine zweite Bedingung, die erfüllt ist, wenn der Abstand von einem zweiten Objekt (C) der verfolgten Objekte zu dem ersten Objekt (B) gleich dem Abstand von dem Kandidatenobjekt (D) zu dem ersten Objekt (B) ist;
wobei das reflektierte Radarsignal eine gemessene Entfernungsrate des Kandidatenobjekts (D) angibt und der Satz von Bedingungen ferner Folgendes umfasst:
eine dritte Bedingung, die erfüllt ist, wenn eine Differenz zwischen der gemessenen Entfernungsrate des Kandidatenobjekts (D) und einer vorhergesagten Entfernungsrate des Kandidatenobjekts (D) unter einem Schwellenwert liegt, wobei die vorhergesagte Entfernungsrate basierend auf einer ersten relativen Geschwindigkeit zwischen dem Radarsensor (A) und dem ersten Objekt (B) und einer zweiten relativen Geschwindigkeit zwischen dem ersten Objekt (B) und dem zweiten Objekt (C) unter der Annahme, dass das Kandidatenobjekt (D) ein Geisterobjekt ist, berechnet wird.

**2.** Verfahren nach Anspruch 1, wobei Informationen über die verfolgten Objekte in einer Datenbank gespeichert werden und die Informationen Positionen und Geschwindigkeiten der verfolgten Objekte in einem Koordinatensystem des Radarsensors umfassen.

**3.** Verfahren nach Anspruch 2, wobei die in der Datenbank gespeicherten Informationen basierend auf Messungen durch den Radarsensor aktualisiert werden.

**4.** Verfahren nach einem der vorhergehenden Ansprüche, wobei der Schwellenwert ein vorbestimmter Wert ist.

**5.** Verfahren nach einem der Ansprüche 1 bis 3, wobei der Schwellenwert auf einem oder mehreren von einer Geschwindigkeit des Radarsensors (A), einer Geschwindigkeit des ersten Objekts (B) und einer Geschwindigkeit des zweiten Objekts (C) basiert.

**6.** Verfahren nach einem der vorhergehenden Ansprüche, ferner umfassend:
Verfolgen des Kandidatenobjekts (D), wenn es als ein reales Objekt identifiziert wird.

**7.** Verfahren nach einem der vorhergehenden Ansprüche, wobei sich die verfolgten Objekte in einem Sichtfeld des Radarsensors (A) befinden.

**8.** Verfahren nach einem der vorhergehenden Ansprüche, ferner umfassend:

Ausführen, wenn das Kandidatenobjekt (D) als ein reales Objekt identifiziert wird, eines vorbestimmten Vorgangs des Fahrzeugs (1) basierend auf der Entfernung und Entfernungsrate des Kandidatenobjekts (D),
wobei der vorbestimmte Vorgang adaptive Scheinwerfersteuerung, automatische Lenkung und/oder automatische Notbremsung umfasst.

9. Datenverarbeitungsvorrichtung (200), umfassend Mittel zum Empfangen von Informationen über ein reflektiertes Radarsignal und Mittel zum Ausführen des Verfahrens nach einem der vorhergehenden Ansprüche.

10. Fahrzeug (1), umfassend:

einen Radarsensor (A), der dazu ausgelegt ist, ein reflektiertes Radarsignal von einem Kandidatenobjekt (D) zu empfangen; und
die Datenverarbeitungsvorrichtung (200) nach Anspruch 9.

**Revendications**

1. Un procédé mis en œuvre par calculateur pour l'identification d'un objet fantôme observé par un capteur radar (A) monté sur un véhicule (1) et utilisé pour suivre des objets, le procédé comprenant :

la réception (S10) d'un signal radar réfléchi en provenance d'un objet candidat (D) ; et
l'identification de l'objet candidat comme étant un objet fantôme dans le cas où sont vérifiées un ensemble de conditions, sinon l'identification de l'objet candidat comme étant un objet réel ;
dans lequel l'ensemble de conditions comprend :

une première condition qui est vérifiée lorsqu'un premier objet (B) des objets suivis se situe sur un trajet entre le capteur radar (A) et l'objet candidat (D) ;
une seconde condition qui est vérifiée lorsque la distance entre un second objet (C) des objets suivis et le premier objet (B) est égale à la distance de l'objet candidat (D) au premier objet (B) ;
dans lequel le signal radar réfléchi indique une variation mesurée de portée de l'objet candidat (D), et l'ensemble de conditions comprend en outre :
une troisième condition qui est vérifiée lorsqu'une différence entre la variation mesurée de portée de l'objet candidat (D) et une variation de portée prédite de l'objet candidat (D) est inférieure à un seuil, la variation de portée prédite étant calculée sur la base d'une première vitesse relative entre le capteur radar (A) et le premier objet (B) et d'une seconde vitesse relative entre le premier objet (B) et le second objet (C), dans l'hypothèse où l'objet candidat (D) est un objet fantôme.

2. Le procédé selon la revendication 1, dans lequel des informations sur les objets suivis sont stockées dans une base de données, et les informations comprennent les positions et les vitesses des objets suivis dans un système de coordonnées du capteur radar.

3. Le procédé selon la revendication 2, dans lequel les informations stockées dans la base de données sont mises à jour sur la base des mesures par le capteur radar.

4. Le procédé selon l'une des revendications précédentes, dans lequel le seuil est une valeur prédéterminée.

5. Le procédé selon l'une des revendications 1 à 3, dans lequel le seuil est basé sur une ou plusieurs d'entre une vitesse du capteur radar (A), une vitesse du premier objet (B), et une vitesse du second objet (C).

6. Le procédé selon l'une des revendications précédentes, comprenant en outre :
le suivi de l'objet candidat (D) lorsqu'il a été identifié comme étant un objet réel.

7. Le procédé selon l'une des revendications précédentes, dans lequel les objets suivis sont situés dans un champ de vision du capteur radar (A).

8. Le procédé selon l'une des revendications précédentes, comprenant en outre :

l'exécution, lorsque l'objet candidat (D) est identifié comme étant un objet réel, d'une opération prédéterminée du véhicule (1), sur la base de la portée et de la variation de portée de l'objet candidat (D),
dans lequel l'opération prédéterminée comprend un contrôle adaptatif des feux, un contrôle automatisé de la direction et/ou un freinage d'urgence automatique.

9. Un appareil de traitement de données (200) comprenant des moyens de réception d'informations sur un signal radar réfléchi, et des moyens pour mettre en œuvre le procédé selon l'une des revendications précédentes.

10. Un véhicule (1) comprenant :

un capteur radar (A) apte à recevoir un signal radar réfléchi provenant d'un objet candidat (D) ; et l'appareil de traitement de données (200) selon la revendication 9.

Fig. 1A

Fig. 1B

Fig. 2A

Fig. 2B

100      START

Receiving a reflected radar signal
from a candidate object

S10

identifying the candidate object as
a ghost object in case a set of
conditions is met, otherwise
identifying the candidate object as
a real object

S20

END

Fig. 3

200

210

220

230

240

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020176483 A1
- WO 2021127702 A1
- EP 3299841 A1
- US 2021104027 A1

**Non-patent literature cited in the description**

- **RICHARDS, M.A.** ; **SCHEER, J.A** ; **SCHEER, J.** ; **HOLM, W.A.** Principles of Modern Radar: Basic Principles. Institution of Engineering and Technology, 2010, vol. 1